# EUROPÄISCHE PATENTSCHRIFT

(11) **EP 0 443 445 B1**
(45) Veröffentlichungstag und Bekanntmachung des Hinweises auf die Patenterteilung: **26.04.1995**
(21) Anmeldenummer: 91102130.1
(22) Anmeldetag: 15.02.1991
(51) Int. Cl.: B23Q 11/00

(54) **Hilfsvorrichtung zum Bohren von Dübellöchern in Gebäudewänden oder -decken**
Drilling jig for dowel holes in building walls or ceilings
Guide de perçage pour trous de chevilles dans les murs ou des plafonds

(30) Priorität: 20.02.1990 DE 4005256
(43) Veröffentlichungstag der Anmeldung: 28.08.1991
(73) Patentinhaber: Barthelt, Hans-Peter, D-73732 Esslingen (DE)
(72) Erfinder: Barthelt, Hans-Peter, D-73732 Esslingen (DE)
(74) Vertreter: Rüger, Rudolf, Dr.-Ing.

(56) Entgegenhaltungen:
- DE-A- 3 501 753
- DE-A- 3 600 626
- FR-A- 2 241 367
- GB-A- 2 005 403
- SE-A- 432 897

## Beschreibung

Die Erfindung betrifft eine Hilfsvorrichtung zum Setzen von Dübellöchern mittels Bohrern in Gebäudewänden oder -decken.

Beim Setzen von Dübellöchern in Gebäudedecken oder -wänden mit Hilfe von Bohrern entsteht Gesteinsmehl unterschiedlicher Körnung. Ein Teil des feinen Gesteinsmehls wird infolge der Luftbewegung, die von dem rotierenden Bohrer und dem Futter hervorgerufen wird, sowie von der Kühlluft der Bohrmaschine weiträumig verteilt.Er ist nachträglich nur sehr schwer wieder zu beseitigen. Die gröberen Bestandteile des Bohrmehls fallen zusammen mit einem Teil des feinen Mehls unmittelbar aus dem Bohrloch heraus und verunreinigen die Wand unmittelbar unterhalb des Bohrlochs. Dies ist besonders unangenehm, wenn es sich um eine verputzte, weißgestrichene Ziegelwand handelt, weil das intensiv rotfärbende Ziegelmehl kaum noch von der weißen Wand zu beseitigen ist.

Diesem Übelstand hilft ein Saugvorsatz ab, der aus der DE-A-27 44 463 bekannt ist. Der Saugvorsatz weist eine mit einem weichelastischen Rand versehene Schale auf, die über einen Kanal strömungsmäßig mit einem Absauggerät, das an den Saugvorsatz anschließbar ist, in Verbindung steht. Seitlich neben der Schale befindet sich ein Ring, dessen Achse bei auf der Wand aufgesetzter Saugvorrichtung auf der Wand senkrecht steht und in dessen Bohrung ein weiterer Kanal mündet, der ebenfalls mit dem anzuschließenden Absauggerät in Verbindung steht.

Im Gebrauchszustand wird die Saugvorrichtung durch den Unterdruck in der Schale an der Wand festgehalten, wobei sich der Ring in einem geringen Abstand vor der Wand befindet und ständig über den in dem Ring mündenden Kanal Luft eingesaugt wird. Die lichte Weite des Rings ist,um die Absaugwirkung nicht zu beeinträchtigen, deutlich größer als der größte zu verwendende obere Durchmesser. Ein Führen des Bohrers mit Hilfe des Rings ist weder vorgesehen noch möglich, weil die Absaugwirkung verlorengehen würde, wenn der Nenndurchmesser des Bohrers mit der lichten Weite des Rings übereinstimmt und dadurch die Mündung des Kanals in dem Ring verlegt werden würde. Außerdem beeinträchtigt der vor der Wand sitzende Ring des Saugvorsatzes die Sicht auf das Bohrloch.

Eine andere Absaugvorrichtung einfacherer Art ist aus der DE-A-36 00 626 bekannt. Bei dieser Saugvorrichtung enthält die an der Wand festzusaugende Schale selbst ein Loch, durch das der Bohrer zum Bohren des Dübellochs hindurchgesteckt wird. Die Weite des Lochs ist größer als der Durchmesser des Bohrers, damit ständig eine Luftströmung stattfindet, die am Bohrer vorbeistreicht und durch die Schale hindurch zu dem Absauganschluß strömt. Auf diese Weise wird zwar zuverlässig ein Austreten von Bohrmehl nach außen vermieden, aber es wird zwangsläufig der von der Schale abgedeckte Wandbereich von dem Bohrmehl, das aus der Bohrung austritt, verunreinigt, denn dieses Bohrmehl wird von der turbulenten Luftströmung unmittelbar an der Wand entlanggeführt.

Bei der bekannten Konstruktion ist praktisch überhaupt keine Sicht auf das Bohrloch gegeben und die Vorrichtung ist auch nicht dazu vorgesehen, den Bohrer zu halten. Je nach der Wahl des Bohrerdurchmessers würden sich unterschiedliche Nebenluftverhältnisse an dem Schalenloch für den Bohrer ergeben und bei kleinen Bohrern würde die Vorrichtung praktisch kaum noch selbsttätig an der Wand halten, weil über dieses Loch zu viel Luft einströmt und der Unterdruck innerhalb der Schale nicht ausreicht.

Eine Vorrichtung zum Führen des Bohrers unmittelbar vor dem Eindringen in die Wand ist in der DE-A-28 00 368 beschrieben. Die Vorrichtung besteht aus einem etwa glockenförmigen Becher, der in seinem Boden eine Bohrbuchse enthält und mit dem Rand auf die Wand aufgesetzt wird. Um die Sicht auf das Bohrloch zu ermöglichen, ist der Becher seitlich mit einer großen Öffnung versehen.

Wenn die bekannte Vorrichtung verwendet werden soll, muß sie von Hand gegen die Wand gedrückt werden und es wird sodann der Bohrer durch die Bohrbuchse der Vorrichtung eingeführt. Die Bohrmaschine kann bei der Verwendung der bekannten Vorrichtung nurmehr mit einer Hand gehalten werden und das gesamte Kippmoment muß von dem in der Vorrichtung steckenden Bohrer aufgebracht werden. Aus Sicherheitsgründen ist diese Konstruktion bedenklich, weil eine Hand sich in unmittelbarer Nähe der rotierenden Teile der Bohrmaschine befindet. In jedem Falle wird beim Bohren das austretende Bohrmehl sich in der Vorrichtung sammeln und den von der Vorrichtung überdeckten Bereich in der Umgebung des Bohrlochs erheblich verschmutzen.

Ausgehend hiervon ist es Aufgabe der Erfindung, eine Hilfsvorrichtung zu schaffen, die einerseits den Bohrer führt und andererseits die Ausbreitung des Bohrmehls im Raum verhindert.

Diese Aufgabe wird erfindungsgemäß durch die Hilfsvorrichtung mit den Merkmalen des Anspruches 1 gelöst.

Infolge der als Saugnapf dienenden Schale hält sich die Hilfsvorrichtung selbst auf der Wand bzw. Decke fest. Die dabei aufgebrachte Haltekraft reicht aus, um das Auflager für den Bohrer hinreichend festzuhalten, damit der Bohrer nicht durch Anisotropien und Unebenheiten der Wand bzw. Decke abgelenkt wird. Dabei ist es von besonderem Vorteil, daß das Auflager sich in unmittelbarer Nähe der Bohrerspitze befindet und infolgedessen nur kleine seitliche Kräfte oder Momente aufzunehmen braucht. Schließlich wird infolge der neben dem Auflager angebrachten Absaugöffnung sofort das aus dem Bohrloch austretende Bohrmehl weggesaugt, ehe es in den Einflußbereich der Kühlluft der Bohrmaschine gelangen kann bzw. von der durch den rotierenden Bohrer umgewälzten Luft aufgewirbelt wird.

Auf diese Weise können mit Hilfe eines einzigen Absauggerätes unter Verwendung der Hilfsvorrichtung beide Funktionen erfüllt werden, nämlich das Halten und Führen des Bohrers und die Beseitigung des aus dem Bohrloch austretenden Gesteinsmehls. Der von den üblichen Absauggeräten und Staubsaugern erzeugte Unterdruck und die angesaugte Luftmenge reichen bei entsprechender Bemessung der Absaugöffnung ohne weiteres aus, um einen ausreichenden Unterdruck in der Schale aufrecht zu erhalten, der ein Verschieben der Schale auf der Wand praktisch ausschließt. Dabei wird die seitliche Führungskraft der Hilfsvorrichtung auf der Wand durch den weichen Rand der Schale verbessert, der sich formschlüssig den Unebenheiten der Wand anpaßt und außerdem die Abdichtung gewährleistet. Kleinere Lecköffnungen zwischen dem Rand der Schale und der Wand können ohne weiteres hingenommen werden.

Wenn der Luftkanal außerhalb der Schale verläuft, wird ein Eindringen von Gesteinsmehl in das Innere der Schale weitgehend verhindert. Der von der Absaugöffnung kommende Luftstrom, der mit dem Gesteinsmehl beladen ist, wird dadurch an der Schale vorbeigeleitet und kann die Wand nicht verunreinigen, da im Innern der Schale praktisch keine Luftströmung existiert.

Es hat sich als zweckmäßig erwiesen, wenn der Rand der Schale etwa aus 3 mm hohem, weichem, geschlossenzelligem Schaumstoff besteht, weil dadurch ein seitliches elastisches Ausweichen der Schale nur in so geringem Umfang auftritt, daß es für die Zentrierung des Bohrers unschädlich ist.

Die Verhältnisse hinsichtlich der Aubsaugung des entstehenden Gesteinsmehls sind besonders günstig, wenn die Absaugöffnung zwischen dem Auflager und der Schale angeordnet ist.

Wenn zwischen dem Auflager und einer durch den Rand der Scheibe definierten Ebene ein Spalt vorgesehen ist und in diesen Spalt die Absaugöffnung einmündet, wird in einem verhältnismäßig großen Bereich um das Bohrloch herum eine auf die Absaugöffnung zu gerichtete Luftströmung sichergestellt, womit die Gefahr des Wegblasens von Gesteinsmehl durch die vom Bohrer mitgenommene Luft weitgehend ausgeschlossen ist.

Das Auflager für den Bohrer hat vorzugsweise die Gestalt einer teilzylindrischen Rinne, was einerseits den Vorzug hat, daß der Blick auf das Bohrloch weitgehend freibleibt und andererseits verhindert, daß Verkantungen des Bohrers die Hilfsvorrichtung gegen die Haftwirkung der Schale von der Wand abdrücken. Schließlich verhindert die teilzylindrische Rinne ein Taumeln oder Prezidieren des Bohrers, wie es der Fall wäre, wenn das Auflager eine geschlossene Bohrung wäre.

Es hat sich als vorteilhaft erwiesen, wenn die Rinne, gemessen in Längsrichtung des Bohrers, eine Länge zwischen 15 und 25 mm hat. Längere Rinnen ermöglichen gleichzeitig eine bessere rechtwinklige Ausrichtung des Bohrers zu der Wand bzw. Decke.

Da das Gesteinsmehl verhältnismäßig abrasiv ist und die Spanraumnuten des Bohrers das Auflager allmählich abnutzen, ist vorteilhafterweise das Auflager auswechselbar an der Hilfsvorrichtung gehaltert.

Wenn die von dem Rand der Schale begrenzte Fläche ca. 150 cm² groß ist, wird einerseits eine genügende Haltekraft für die Hilfsvorrichtung erzeugt. Andererseits kann die Hilfsvorrichtung ohne Abschalten des Absauggerätes von Hand von der Wand abgehoben werden. Dabei ist vorteilhafterweise die Querschnittsfläche der Absaugöffnung ca. 80 mm² groß, um für einen genügenden Unterdruck in der Schale zu sorgen.

Der Unterdruck in der Schale wird weiter begünstigt, wenn die Verbindungsöffnung zwischen dem Luftkanal und der Schale soweit wie möglich von der Absaugöffnung entfernt liegt.

In der Zeichnung ist ein Ausführungsbeispiel des Gegenstándes der Erfindung dargestellt. Es zeigen:
- Fig. 1: die Hilfsvorrichtung in einer Draufsicht auf die an einer Gebäudewand oder -decke anzulegenden Seite, und

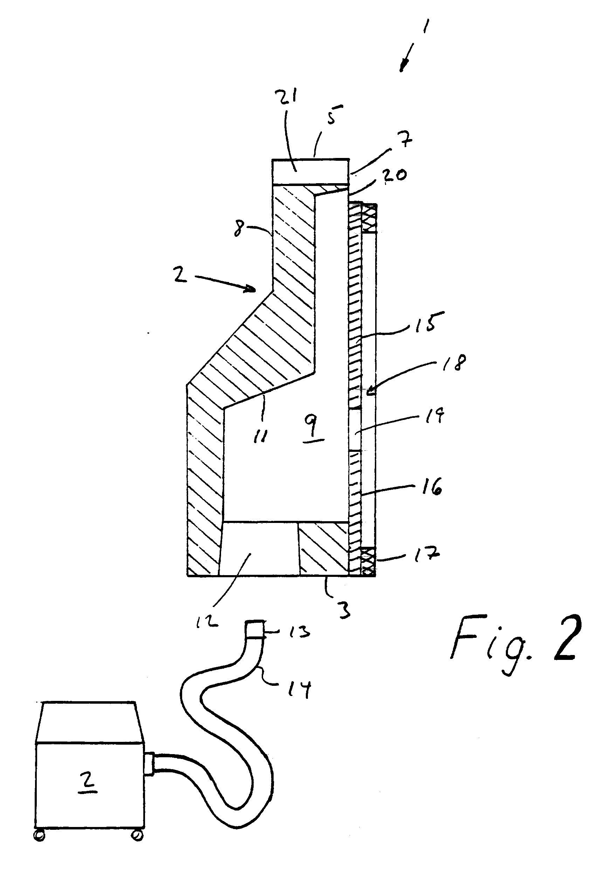

- Fig. 2: die Hilfsvorrichtung nach Fig. 1, in einem Längsschnitt entlang der Linie II-II nach Fig. 1.

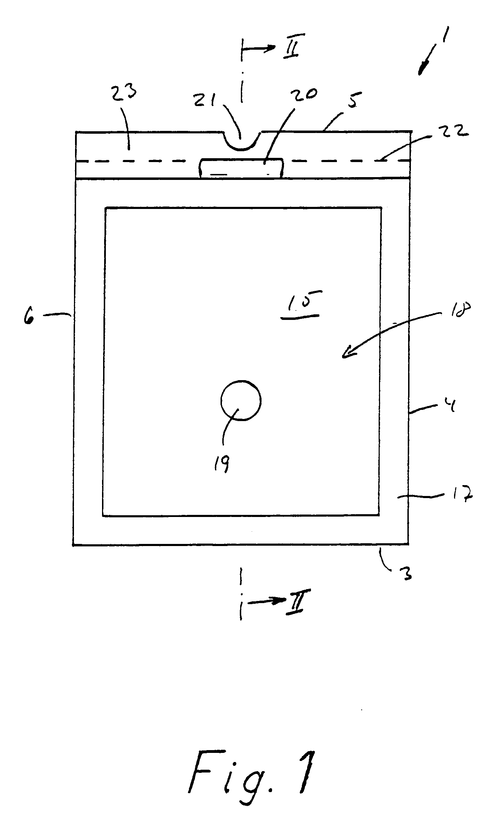

In den Figuren ist eine Vorrichtung 1 veranschaulicht, die als Hilfe zum Positionieren eines Bohrers beim Setzen von Dübellöchern in Gebäudewänden oder -decken dient und gleichzeitig das entstehende Gesteinsmehl im Zusammenwirken mit einer Absaugeinrichtung 2 absaugen soll. Die Vorrichtung 1 besteht aus einem Gehäuse 2, das in der in Fig. 1 erkennbaren Draufsicht etwa rechteckig ist und seitlich bzw. oben und unten von Seitenflächen 3, 4, 5 und 6 begrenzt ist. Im Querschnitt gesehen verjüngt sich das Gehäuse, ausgehend von der unteren Seitenfläche 3, in Richtung auf die obere Seitenfläche 5, und zwar wird es von einer planen Vorderseite 7 sowie einer gestuft verlaufenden Rückseite 8 begrenzt. Im Inneren des Gehäuses 2 befindet sich eine Kammer 9, die in einer später noch zu erläuternden Weise als Luftkanal wirkt. Die Kammer 9 folgt mit ihrer Rückwand 11 etwa der Kontur der Rückseite 8, während sie zur Vorderseite 7 hin in dem Gehäuse 2 offen und zur Seite hin von dem Gehäuse 2 allseitig umschlossen ist. Lediglich in die Unterseite der Kammer 9 mündet von der unteren Seitenfläche 3 her eine Anschlußöffnung 12, in die reibschlüssig ein Mundstück 13 eines Saugschlauches 14 einsteckbar ist, der die Vorrichtung 1 mit dem Absauggerät bzw. Staubsauger 2 verbindet. Zu der Vorderseite 7 hin ist die Kammer 9 durch eine ebene Platte 15 verschlossen, auf deren von der Vorrichtung 1 wegweisende Vorderseite 16 eine längs dem Rand der Platte 15 umlaufende Dichtleiste 17 aufgeklebt ist. Die Dichtleiste 17 besteht aus einem geschlossenzelligen Schaumstoff und hat eine Dicke von ca. 3 mm, während die Breite, gemessen in Richtung parallel zu der Vorderseite 16 zwischen 5 und 10 mm liegt. Die umlaufende, in sich geschlossene Dichtleiste 17 begrenzt zusammen mit der Platte 15 eine flache rechteckige Schale 18, die eine wirksame Fläche von ca. 150 cm² aufweist. Über eine Bohrung 19 steht die Schale 18 mit der Kammer 9 strömungsmäßig in Verbindung.

Ersichtlicherweise folgt die ebenfalls rechteckige Außenkontur der Dichtleiste 17 den Seitenflächen 3, 4 und 6 des Gehäuses 2 und verläuft knapp unterhalb der oberen Seitenfläche 5, wobei die zwischen dem Gehäuse 2 und der Dichtleiste 17 befindliche Platte 15 entsprechend große Außenabmessungen hat. Da die Platte 15 in vertikaler Richtung etwas kürzer ist als die Höhe des Gehäuses 2 bzw. die Länge der Kammer 9, gemessen in Richtung parallel zu der Höhe der Vorrichtung 1, entsteht über der Platte 15 unterhalb der oberen Seitenfläche 5 eine spaltförmige längliche Absaugöffnung 20, über die die Kammer 9 ebenfalls mit der Außenatmosphäre verbunden ist. Die wirksame Fläche der spaltförmigen Absaugöffnung 20 beträgt etwa 80 mm², wobei ihre Höhe ca. 3 mm groß ist, während die Länge, gemessen parallel zu der Längenerstreckung der Seitenfläche 5, näherungsweise 20 mm beträgt.

Infolge der auf der Vorderseite 7 des Gehäuses 2 befindlichen Platte 15, die eine Dicke von etwa ebenfalls 3 mm aufweist, springt die Absaugöffnung 20 gegenüber der durch die Dichtleiste 17 definierten Ebene um ca 6 mm zurück.

Um beim Setzen des Dübellochs den Bohrer führen zu können, befindet sich in der oberen Seitenfläche 5 ein Auflager in Gestalt einer halbzylindrischen Rinne 21, die nach oben hin offen ist und deren Längsachse senkrecht auf der Vorderseite 7 und damit auf der von der Dichtleiste 17 definierten Ebene steht. Die Rinne 21 ist sowohl zu der Vorderseite 7 als auch zu der Rückseite 8 hin offen, so daß eine Art Wiege entsteht, in die der Bohrer einzulegen ist. Der Krümmungsradius der Rinne 21 darf nicht kleiner als der halbe Durchmesser des Bohrers, aber auch nicht wesentlich größer sein. Es hat sich gezeigt, daß mit einer Rinne 21 mit einem Radius von 5 mm Bohrer mit einem Nenndurchmesser zwischen 5 mm und 10 mm hinreichend gut geführt werden können.

Wie die Figuren erkennen lassen, liegt die tiefste Stelle der Rinne 21 nur wenig oberhalb der Absaugöffnung 20, und zwar ist der Abstand zwischen der tiefsten Stelle der Rinne 21 und der Absaugöffnung 20 etwa so groß oder kleiner wie die Höhenabmessung der Absaugöffnung 20.

Die Verwendung der insoweit beschriebenen Vorrichtung geschieht in der Weise, daß zunächst der Absaugschlauch 14 mit seinem Anschluß- oder Mundstück 13 in die geringfügig konische Anschlußöffnung 12 eingesteckt wird, in der es reibschlüssig gehalten ist. Sodann wird das Absauggerät 2 eingeschaltet, damit zunächst sowohl durch die Absaugöffnung 20 als auch die Öffnung 19 in der Schale 18 atmosphärische Luft angesaugt wird. Anschließend wird die Vorrichtung mit der offenen Seite der flachen Schale 18 voraus auf der Gebäudewand oder -decke plaziert, so daß der Mittelpunkt des zu setzenden Dübelloches von der Unterseite der Rinne 21 einen Abstand hat, der dem halben Bohrlochdurchmesser entspricht. Bei einer Rinne 21 mit 5 mm Krümmungsradius und einem Bohrlochdurchmesser von 10 mm fällt die Mitte des zu setzenden Bohrloches mit der Achse der Rinne 21 zusammen.

Da die Absaugöffnung 20 einen deutlich kleineren Querschnitt als die sich daran anschließende Kammer 9 bzw. der zu dem Absauggerät 2 führende Saugschlauch 14 aufweist, entsteht hinter der Absaugöffnung 20 ein Unterdruck, der, wenn die Vorrichtung 1 auf die Gebäudewand oder -decke aufgesetzt ist, auch in der Schale 18 wirksam ist. Die Vorrichtung 1 wird dadurch an die Gebäudewand oder -decke nach Art eines Saugnapfes hingesaugt und ist nur mit größerer Kraft auf der Gebäudewand oder -decke zu verschieben. Es kann nun der in die Bohrmaschine eingespannte Bohrer in die Rinne 21 eingelegt werden, und zwar so, daß seine Längsachse parallel zu der Längsachse der Rinne 21 verläuft. Das sodann beim Bohren entstehende Gesteinsmehl wird unmittelbar über die Absaugöffnung 20 abgesaugt, die in jenen Spalt mündet, der zwischen der Gebäudewand oder -decke einerseits und der Vorderseite 7 der Vorrichtung 1 andererseits entsteht. Auf diese Weise strömt ständig Luft an dem Bohrer vorbei in Richtung auf die Absaugöffnung 20, um alles aus dem Bohrloch austretende Bohrmehl wegzusaugen.

Da die strömende und mit Bohrmehl beladene Luft durch die Kammer 9 und somit an der Rückseite der Platte 15 vorbeiströmt, kommt sie nicht mehr mit der Gebäudewand oder -decke in Berührung und kann sie folglich auch nicht verunreinigen. Die flache Schale 18 ist randseitig weitgehend abgedichtet, so daß auch hierüber keine Fremdluft angesaugt werden kann.

Die Haltekraft der Vorrichtung 1 auf der Wand ermöglicht gleichzeitig in Verbindung mit der Rinne 21 den Bohrer unmittelbar neben seiner Spitze zu führen, wobei er von Hand durch entsprechende Führung der Bohrmaschine gegen die Wand der Rinne 21 gedrückt wird, damit Unebenheiten in der Gebäudewand oder -decke bzw. unterschiedlich harte Stellen die Bohrerspitze nicht ablenken können.

Ersichtlicherweise wird der von dem Absauggerät 2 erzeugte Unterdruck einerseits dazu verwendet, die Vorrichtung 1 an der Gebäudewand oder -decke festzusaugen und andererseits dazu das entstehende Gesteinsmehl unmittelbar an der Mündung des Bohrloches zu beseitigen.

Zum Versetzen der Vorrichtung 1 genügt es, sie an dem Mundstück 13 des Saugschlauches 14 gegen die Wirkung der Saugkraft von der Gebäudewand oder -decke abzuheben. Sie kippt dabei um den parallel zu der oberen Seitenfläche 5 verlaufenden Teil der Dichtleiste 17, wobei infolge der meist vorhandenen Unebenheiten auf der Wand sofort Undichtigkeiten entstehen, die den Unterdruck in der Schale 18 zusammenbrechen lassen, weshalb das Abheben ohne weiteres möglich ist.

Da die Spannuten des Bohrers sich bei der Verwendung der Vorrichtung 1 in der Rinne 21 drehen, nutzen sie die Rinne 21 mehr oder weniger stark bzw. schnell ab. Es ist deswegen zweckmäßig, wie durch eine gestrichelte Linie 22 angedeutet, einen die Rinne 21 enthaltenden oberen Teil 23 des Gehäuses 2, der die Rinne 21 vollständig enthält, auswechselbar zu machen, um beim Verschleiß der Rinne 21 nur diesen Teil auswechseln zu müssen. Die Halterung dieses Gehäuseabschnittes 23 kann beispielsweise durch Schrauben erfolgen.

## Patentansprüche

1. Hilfsvorrichtung zum Positionieren von Bohrern beim Setzen von Dübellöchern in Gebäudewänden oder -decken u. dgl., mit einer einen dichtfähigen, in einer Ebene liegenden Rand (17) aufweisenden Schale (18), mit einem rinnen-förmigen Auflager (21) für den Bohrer, das zumindest im Gebrauchszustand mit der Schale (18) starr verbunden ist, wobei zwischen dem Auflager (21) und der durch den Rand (17) der Schale (18) definierten Ebene ein Spalt vorhanden ist, mit einem Luftkanal (9), der eine in der Nähe des Auflagers (21) befindliche und in den Spalt mündende Absaugöffnung (20), die sich zwischen dem Auflager (21) und der Schale (18) befindet, sowie einen Anschluß (12) für ein einen Unterdruck erzeugendes Absauggerät (2) aufweist, und mit einer Strömungsverbindung (19) zwischen dem Luftkanal (9) und der Schale (18).

2. Vorrichtung nach Anspruch 1, dadurch gekennzeichnet, daß die Schale (18) einen steifen Boden (16) aufweist.

3. Vorrichtung nach Anspruch 1, dadurch gekennzeichnet, daß der Luftkanal (9) außerhalb der Schale (18) verläuft.

4. Vorrichtung nach Anspruch 1, dadurch gekennzeichnet, daß der Rand der Schale (18) von einer umlaufenden Leiste (17) aus einem elastischen Material gebildet ist, das stoffschlüssig an ihrem Boden (16) befestigt ist.

5. Vorrichtung nach Anspruch 4, dadurch gekennzeichnet, daß die Leiste (17) aus ca. 3 mm starkem elastischem, vorzugsweise geschlossenzelligem Material besteht.

6. Vorrichtung nach Anspruch 1, dadurch gekennzeichnet, daß der Spalt eine Weite von 1 mm bis 10 mm aufweist.

7. Vorrichtung nach Anspruch 1, dadurch gekennzeichnet, daß das Auflager für den Bohrer eine gerade Rinne (21) enthält, deren Längsachse senkrecht auf der durch den Rand (17) der Schale (18) definierten Ebene steht.

8. Vorrichtung nach Anspruch 1, dadurch gekennzeichnet, daß das Auslager (21) lösbar mit der Schale (18) verbunden ist.

9. Vorrichtung nach Anspruch 7, dadurch gekennzeichnet, daß die Rinne (21) im Querschnitt etwa halbzylindrisch ist.

10. Vorrichtung nach Anspruch 7 , dadurch gekennzeichnet, daß die Rinne (21) eine Länge zwischen 5 mm und 30 mm, vorzugsweise zwischen 15 mm und 20 mm aufweist.

11. Vorrichtung nach Anspruch 1, dadurch gekennzeichnet, daß die von dem Rand (17) der Schale (18) begrenzte Fläche ca. 150 cm² groß ist.

12. Vorrichtung nach Anspruch 1, dadurch gekennzeichnet, daß die Absaugöffnung (20) eine Querschnittsfläche von ca. 80 mm² aufweist.

13. Vorrichtung nach Anspruch 1, dadurch gekennzeichnet, daß der Krümmungsradius der Rinne (21) zumindest halb so groß ist wie der Durchmesser des zu verwendenden Bohrers.

## Claims

1. Auxiliary device for positioning drills when placing dowel holes in building walls or ceilings and similar, with a shell (18) having a sealable edge (17) lying in one plane, with a groove-shaped support (21) for the drill, which is rigidly connected to the shell (18) at least when ready for use, wherein a gap is provided between the support (21) and the plane defined by the edge (17) of the shell (18), said gap having an air channel (9) with a suction opening (20), which is located adjacent to the support (21) ad feeds into the gap and is located between the support (21) and the shell (18), as well as a connection (12) for a suction device (2) generating a vacuum, and with a flow connection (19) between the air channel (9) and the shell (18).

2. Device according to Claim 1, characterised in that the shell (18) has a rigid base (16).

3. Device according to Claim 1, characterised in that the air channel (9) extends outside the shell (18).

4. Device according to Claim 1, characterised in that the edge of the shell (18) is formed by a circumferential edge (17) made of an elastic material, which is fastened in substance at its base (16).

5. Device according to Claim 4, characterised in that the ledge (17) is made of elastic, preferably closed-cell, material approximately 3 mm thick.

6. Device according to Claim 1, characterised in that the gap has a width of 1 mm to 10 mm.

7. Device according to Claim 1, characterised in that the support for the drill has a straight groove (21), the longitudinal axis of which is perpendicular to the plane defined by the edge (17) of the shell (18).

8. Device according to Claim 1, characterised in that the support (21) is detachably connected to the shell (18).

9. Device according to Claim 7, characterised in that the groove (21) is approximately semi-cylindrical in cross-section.

10. Device according to Claim 7, characterised in that the length of the groove (21) is between 5 mm and 30 mm, preferably between 15 mm and 20 mm.

11. Device according to Claim 1, characterised in that the area bordered by the edge (17) of the shell (18) is approximately 150 cm².

12. Device according to Claim 1, characterised in that the suction opening (20) has a cross-sectional area of approximately 80 mm².

13. Device according to Claim 1, characterised in that the radius of curvature of the groove (21) is at least half the diameter of the drill to be used.

## Revendications

1. Dispositif auxiliaire pour le positionnement de forets lors du perçage de trous de chevilles dans des murs, des plafonds ou analogues de bâtiments, avec une cuvette (18) pourvue d'un bord (17) qui assure l'étanchéité et est situé dans un plan, avec un appui (21) en forme de gouttière pour le foret, lequel appui, en position d'utilisation au moins, est lié rigidement à la cuvette (18), un interstice existant entre l'appui (21) et le plan défini par le bord (17) de la cuvette (18), avec un canal d'air (9) comportant un orifice d'aspiration (20) qui est situé au voisinage de l'appui (21), débouche dans l'interstice et est disposé entre l'appui (21) et la cuvette (18) ainsi qu'un raccord (12) pour un appareil d'aspiration (2) qui produit une dépression et avec une communication d'écoulement (19) entre le canal d'air (9) et la cuvette (18).

2. Dispositif selon la revendication 1, caractérisé par le fait que la cuvette (18) a un fond (16) rigide.

3. Dispositif selon la revendication 1, caractérisé par le fait que le canal d'air (9) s'étend à l'extérieur de la cuvette (18).

4. Dispositif selon la revendication 1, caractérisé par le fait que le bord de la cuvette (18) est constitué par un jonc (17) périphérique en un matériau élastique qui fait corps avec le fond de la cuvette.

5. Dispositif selon la revendication 4, caractérisé par le fait que le jonc (17) est réalisé en un matériau élastique d'environ 3 mm d'épaisseur, de préférence à cellules fermées.

6. Dispositif selon la revendication 1, caractérisé par le fait que l'interstice a une largeur comprise entre 1 mm et 10 mm.

7. Dispositif selon la revendication 1, caractérisé par le fait que l'appui pour le foret comprend une gouttière (21) rectiligne dont l'axe longitudinal est perpendiculaire au plan défini par le bord (17) de la cuvette (18).

8. Dispositif selon la revendication 1, caractérisé par le fait que l'appui (21) est lié de manière séparable à la cuvette (18).

9. Dispositif selon la revendication 7, caractérisé par le fait que la gouttière (21) a une section transversale sensiblement semi-cylindrique.

10. Dispositif selon la revendication 7, caractérisé par le fait que la gouttière (21) a une longueur comprise entre 5 mm et 30 mm, de préférence comprise entre 15 mm et 30 mm.

11. Dispositif selon la revendication 1, caractérisé par le fait que la surface délimitée par le bord (17) de la cuvette (18) est d'environ 150 cm².

12. Dispositif selon la revendication 1, caractérisé par le fait que l'orifice d'aspiration (20) a une surface en section transversale de 80 mm² environ.

13. Dispositif selon la revendication 1, caractérisé par le fait que le rayon de courbure de la gouttière (21) est au moins égal à la moitié du diamètre du foret à utiliser.
